# EUROPEAN PATENT APPLICATION

(11) **EP 4 723 796 A1**
(43) Date of publication of application: **08.04.2026**
(21) Application number: 23939738.3
(22) Date of filing: 02.06.2023
(51) Int. Cl.: H04W 76/15, H04W 84/12

(54) **ACCESS POINT, WIRELESS TERMINAL DEVICE, AND WIRELESS COMMUNICATION METHOD**

(71) Applicant: NTT, Inc., Tokyo 100-8116 (JP)
(72) Inventor: KISHIDA, Akira, Musashino-shi, Tokyo 180-8585 (JP); NAGATA, Kengo, Musashino-shi, Tokyo 180-8585 (JP); ABEYSEKERA, Hirantha, Musashino-shi, Tokyo 180-8585 (JP); OTANI, Hanae, Musashino-shi, Tokyo 180-8585 (JP); ASAI, Yusuke, Musashino-shi, Tokyo 180-8585 (JP); TAKATORI, Yasushi, Musashino-shi, Tokyo 180-8585 (JP)
(74) Representative: Nederlandsch Octrooibureau
(86) International application number: PCT/JP2023/020697
(87) International publication number: WO 2024/247267

(57) **Abstract**

An access point according to an embodiment includes a first wireless signal processing unit configured to transmit and receive a wireless signal using a microwave band, a second wireless signal processing unit configured to transmit and receive a wireless signal using a millimeter wave band, and a management unit configured to manage a first wireless link between the first wireless signal processing unit and the terminal and a second wireless link between the second wireless signal processing unit and the terminal. The management unit switches the second wireless link to a state of not being used for data communication when communication quality of the second wireless link becomes worse than a predetermined first standard when the second wireless link is in a state of being used for the data communication, and switches the second wireless link to a state of being used for the data communication when the communication quality of the second wireless link becomes better than a predetermined second standard when the second wireless link is in a state of not being used for the data communication.

## Description

### Technical Field

The present invention relates to wireless communication.

### Background Art

A wireless local area network (LAN) is known as a communication system that wirelessly connects an access point to a wireless terminal apparatus. The IEEE 802.11 standard group is widely used as the wireless LAN.

In IEEE 802.11be under development as a successor standard of IEEE 802.11ax, multi-link transmission for performing frame transmission using a plurality of transmission paths (wireless links) having different frequency channels is planned to be defined.

On the other hand, in the next leading standard of IEEE 802.11be, use of a frequency band other than a microwave band (for example, a millimeter wave band), which is an unlicensed band in which a wireless LAN can be used, has been studied.

Radio waves in a high frequency band such as a millimeter wave band have stronger straightness than radio waves in a microwave band, and thus have a disadvantage of being weak against shielding. Therefore, in a case where the millimeter wave band is used for multi-link transmission, there is a concern about characteristic deterioration due to a variation in communication quality.

### Citation List

### Non Patent Literature

Non Patent Literature 1: IEEE 802.11be/D3.0, "35.3 Multi-link operation", p479-p586, January 2023.

### Summary of Invention

### Technical Problem

An object of the present invention is to provide a wireless communication technology that enables highly reliable transmission even when communication quality of a wireless link using a frequency channel of a millimeter wave band is deteriorated in multi-link transmission using the millimeter wave band.

### Solution to Problem

An access point according to an embodiment of the present invention includes a first wireless signal processing unit configured to transmit and receive a wireless signal using a microwave band, a second wireless signal processing unit configured to transmit and receive a wireless signal using a millimeter wave band, and a management unit configured to manage a first wireless link between the first wireless signal processing unit and a wireless terminal apparatus and a second wireless link between the second wireless signal processing unit and the wireless terminal apparatus. The management unit switches the second wireless link to a state of not being used for data communication when communication quality of the second wireless link becomes worse than a predetermined first standard when the second wireless link is in a state of being used for data communication, and switches the second wireless link to a state of being used for the data communication when the communication quality of the second wireless link becomes better than a predetermined second standard when the second wireless link is in a state of not being used for the data communication.

### Advantageous Effects of Invention

According to the present invention, there is with a technology of providing a wireless communication technology that enables highly reliable transmission even when communication quality of a wireless link using a frequency channel of a millimeter wave band is deteriorated in multi-link transmission using the millimeter wave band.

### Brief Description of Drawings

Fig. 1 is a block diagram illustrating a communication system according to an embodiment.
Fig. 2 is a diagram illustrating link management information according to the embodiment.
Fig. 3 is a block diagram illustrating a hardware configuration of an access point according to the embodiment.
Fig. 4 is a block diagram illustrating a hardware configuration of a terminal according to the embodiment.
Fig. 5 is a block diagram illustrating a functional configuration of the access point according to the embodiment.
Fig. 6 is a block diagram illustrating a functional configuration of an affiliated AP included in the access point according to the embodiment.
Fig. 7 is a block diagram illustrating a functional configuration of the terminal according to the embodiment.
Fig. 8 illustrates a frame format of an association request according to the embodiment.
Fig. 9 is a flowchart illustrating processing of assigning a TID to a traffic according to the embodiment.
Fig. 10 is a flowchart illustrating switching of a millimeter wave link according to the embodiment.
Fig. 11 is a sequence diagram illustrating a procedure of switching the millimeter wave link according to the embodiment.
Fig. 12 is a sequence diagram illustrating a procedure of switching the millimeter wave link according to the embodiment.
Fig. 13 is a flowchart illustrating processing of determining a channel switching destination candidate according to the embodiment.
Fig. 14 is a flowchart illustrating switching processing of a channel according to the embodiment.

### Description of Embodiments

Hereinafter, embodiments of the present invention will be described with reference to the drawings.

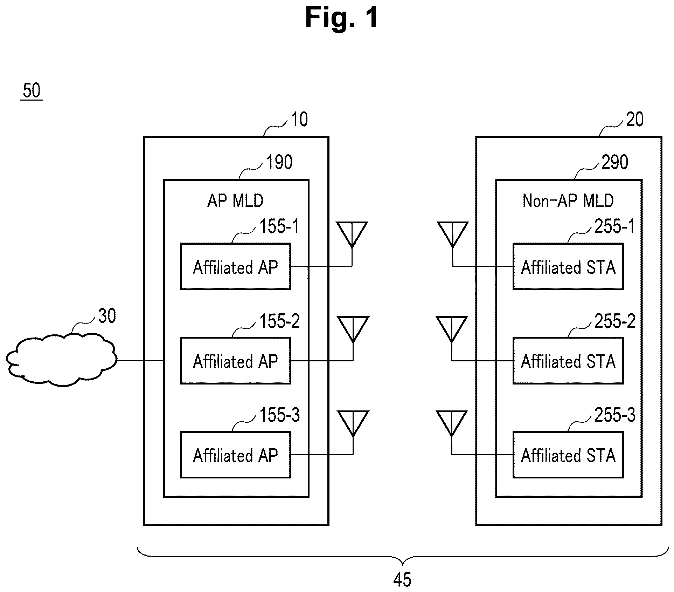

Fig. 1 schematically illustrates an example of a configuration of a communication system 50 including a wireless communication system 45 according to an embodiment. As illustrated in Fig. 1, the communication system 50 includes an access point (AP) 10, a terminal 20, and a communication network 30. The access point 10 and the terminal 20 are included in the wireless communication system 45.

The access point 10 is an access point of the wireless LAN. The access point 10 can be connected to one or more wireless terminal apparatuses. The number of wireless terminal apparatuses connected to the access point 10 dynamically changes. In the example illustrated in Fig. 1, the access point 10 is connected to the terminal 20 corresponding to a wireless terminal apparatus. The access point 10 establishes one or more wireless links with the terminal 20, and communicates with the terminal 20 by using the established wireless links. A state in which a plurality of wireless links are established between the access point 10 and the terminal 20 is referred to as multi-link connection. The access point 10 is connected in a wired manner to the communication network 30 which may include the Internet.

The terminal 20 is a wireless terminal apparatus having a wireless communication function, and includes a wireless apparatus that operates as a client of a wireless LAN. As an example, a wireless apparatus is implemented by a semiconductor chip and incorporated into the terminal 20. Examples of the wireless terminal apparatus include smart phones, mobile phones, tablet personal computers (PCs), desktop PCs, laptop PCs, Internet of things (IoT) sensors/devices. The terminal 20 accesses the communication network 30 via the access point 10. For example, the terminal 20 exchanges data with a server (not illustrated) on the communication network 30 via the access point 10. For example, the server may be a service provider that provides a service such as an online gaming, and exchanges data related to the service with the terminal 20 via the communication network 30.

The wireless communication between the access point 10 and the terminal 20 is based on the IEEE 802.11 standard. The IEEE 802.11 standard defines a first layer and a media access control (MAC) sublayer in a second layer of an open systems interconnection (OSI) model. In the OSI model, the communication function is divided into seven layers (a first layer: a physical layer, a second layer: a data link layer, a third layer: a network layer, a fourth layer: a transport layer, a fifth layer: a session layer, a sixth layer: a presentation layer, and a seventh layer: an application layer). The data link layer includes, for example, a logical link control (LLC) sublayer and a MAC sublayer.

Note that although the wireless communication based on the IEEE 802.11 standard is described as an example in the present specification, a wireless communication standard different from the IEEE 802.11 standard may be used.

In the present embodiment, the access point 10 and the terminal 20 support multi-link operation. The multi-link operation includes an operation of logically establishing a plurality of wireless links between an access point and a wireless terminal apparatus. In the multi-link operation, the access point and the wireless terminal apparatus communicate with each other by multi-link transmission in which transmission is performed using a plurality of established wireless links. For example, the wireless terminal apparatus performs carrier sensing based on carrier sense multiple access with collision avoidance (CSMA/CA) for each wireless link, and transmits a data frame to the access point on the wireless link on which the transmission right is obtained.

The access point 10 includes an access point multi-link device (AP MLD) 190. The AP MLD 190 includes a plurality of affiliated APs 155 (for example, affiliated APs 155-1, 155-2, 155-3), and communicates with the terminal 20 by using these affiliated APs 155. The affiliated AP 155 indicates a logical entity that is a MAC layer and physical layer interface to a wireless medium.

The affiliated APs 155-1 and 155-2 are configured to transmit and receive a wireless signal by using a frequency channel included in a microwave band. As the microwave band, a 2.4 GHz band, a 5 GHz band, a 6 GHz band, or the like may be used. The affiliated APs 155-1, 155-2 may use frequency channels included in different frequency bands, or may use different frequency channels included in the same frequency band. The affiliated AP 155-3 is configured to transmit and receive a wireless signal using a frequency channel included in the millimeter wave band. As the millimeter wave band, a 45 GHz band, a 60 GHz band, or the like may be used. The millimeter wave band is a frequency band higher than the microwave band.

The AP MLD 190 may include at least two affiliated APs 155 including the affiliated AP 155 that handles a microwave band and the affiliated AP 155 that handles a millimeter wave band.

The terminal 20 includes a non-access point multi-link device (Non-AP MLD) 290. The Non-AP MLD 290 includes a plurality of affiliated STA 255 (for example, affiliated STAs 255-1, 255-2, 255-3), and communicates with the access point 10 by using these affiliated STAs 255. The affiliated STA 255 indicates a logical entity that is a MAC layer and physical layer interface to a wireless medium.

The affiliated STAs 255-1, 255-2 are configured to transmit and receive a wireless signal using a frequency channel included in the microwave band, and the affiliated STAs 255-3 is configured to transmit and receive a wireless signal using a frequency channel included in the millimeter wave band. For example, the affiliated STAs 255-1, 255-2, 255-3 are each controlled to use the same frequency channel as that used by the affiliated APs 155-1, 155-2, 155-3 to communicate with the affiliated APs 155-1, 155-2, 155-3 of the access point 10. Hereinafter, the frequency channel will be simply referred to as the channel.

The Non-AP MLD 290 may include at least two affiliated STAs 255 including the affiliated STA 255 that handles a microwave band and the affiliated STA 255 that handles a millimeter wave band. The number of affiliated STAs 255 included in the Non-AP MLD 290 may be different from the number of affiliated APs 155 included in the AP MLD 190.

A procedure for establishing a link set between the access point 10 and the terminal 20 will be briefly described. Establishing a link set between the access point 10 and the terminal 20 includes collectively establishing a plurality of possible wireless links between the access point 10 and the terminal 20.

The access point 10 periodically broadcasts a beacon frame to advertise the presence of the access point 10.

The beacon frame is a type of management frame, and includes information indicating that the access point 10 supports the multi-link operation, information indicating that the access point 10 supports communication in the millimeter wave band, and the like. The terminal 20 receives the beacon frame from the access point 10, and recognizes, on the basis of the received beacon frame, that the access point 10 supports multi-link operation and that the access point 10 supports communication in the millimeter wave band.

The terminal 20 may transmit a probe request to the access point 10. The access point 10 receives a probe request from the terminal 20, and transmits a probe response to the terminal 20 as a response to the probe request. The probe response includes information indicating that the access point 10 supports the multi-link operation, information indicating that the access point 10 supports communication in the millimeter wave band, and the like. In this case, the terminal 20 recognizes, on the basis of the probe response received from the access point 10, that the access point 10 supports multi-link operation and that the access point 10 supports communication in the millimeter wave band.

After receiving the beacon frame or the probe response, the terminal 20 transmits an association request for requesting establishment of a link set to the access point 10. The association request includes information indicating whether to use communication in the millimeter wave band, calibration information for adjusting a radio frequency (RF) of an interface using the millimeter wave band, identification information for identifying the Non-AP MLD 290, identification information for identifying each of the affiliated STAs 255, information for specifying a connection destination of each of the affiliated STAs 255, and the like. The terminal 20 uses any one of the affiliated STAs 255-1, 255-2 using a microwave band to transmit an association request.

The access point 10 receives an association request from the terminal 20, and sets up a link set between the access point 10 and the terminal 20 on the basis of the received association request. For example, the access point 10 sets the identification information of the affiliated STA 255 serving as the connection destination to the affiliated AP 155 specified as the connection destination in the association request. Further, the access point 10 adjusts the radio frequency of the affiliated AP 155-3 on the basis of the calibration information included in the association request.

The access point 10 transmits an association response, which is a response to the association request, to the terminal 20. The access point 10 uses any one of the affiliated APs 155-1, 155-2 using a microwave band to transmit an association response. For example, in a case where the affiliated AP 155-1 receives an association request from the terminal 20, the affiliated AP 155-1 is used to transmit an association response.

The terminal 20 receives an association response from the access point 10, and in response to the reception of the association response, sets identification information for identifying the affiliated AP 155 serving as a connection destination and a channel to each of the affiliated STAs 255.

As described above, a link set is established between the access point 10 and the terminal 20. Specifically, a wireless link between the affiliated AP 155-1 and the affiliated STA 255-1, a wireless link between the affiliated AP 155-2 and the affiliated STA 255-2, and a wireless link between the affiliated AP 155-3 and the affiliated STA 255-3 are established. A state in which individual connections are established between each of the affiliated APs 155 constituting the access point 10 and each of the affiliated STAs 255 constituting the terminal 20 is referred to as wireless connection.

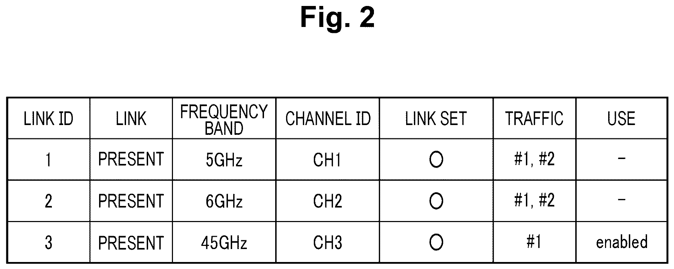

Fig. 2 schematically illustrates an example of link management information held by the terminal 20. The link management information illustrated in Fig. 2 indicates a state of a wireless link between the access point 10 and the terminal 20. The link management information includes a link ID, frequency band information, a channel ID, link information, link set information, traffic information, and use information.

The link ID is identification information for identifying a wireless link. The frequency band information is information indicating a frequency band used for a wireless link. The channel ID is identification information for identifying a channel used in a wireless link. In the example illustrated in Fig. 2, the terminal 20 can use three wireless links established with the access point 10. The wireless link whose link ID is 1 uses a channel CH1 included in the 5 GHz band, the wireless link whose link ID is 2 uses a channel CH2 included in the 6 GHz band, and the link whose link ID is 3 uses a channel CH3 included in the 45 GHz band.

The link information indicates whether a wireless link is established. The link set information indicates whether a link set is established between the access point 10 and the terminal 20. In a case where a link set is established, the link information indicates which wireless link constitutes the link set. In the example illustrated in Fig. 2, three wireless links having a link ID of 1 to 3 are included in the link set.

The traffic information indicates a traffic identifier (TID) assigned to a wireless link. The TID is an identifier indicating a traffic type, and each traffic type may be associated with an access category. The access category includes, for example, voice (VO), video (VI), best effort (BE), background (BK), and low latency (LL). In the example illustrated in Fig. 2, the TID #1 is associated with any of VO, VI, BE, and BK, and the TID #2 is associated with LL. The TID #2 is a TID assigned to traffic for which reliable communication is required, for example, traffic for which low latency is required. The TIDs assigned to traffic for which reliable communication is required, such as the TID #2, are prohibited from being assigned to wireless links using the millimeter wave band. The TID #1 is assigned to three wireless links whose link IDs are 1 to 3, and the TID #2 is assigned to two wireless links whose link IDs are 1 and 2.

The use information indicates whether the wireless link is available. The use information is set for the wireless link using the millimeter wave band, and the use information is not set for the wireless link using the microwave band. In the present embodiment, a wireless link using a millimeter wave band is set to either an enabled state (enabled) or a disabled state (temporary disabled). Hereinafter, the wireless link using the millimeter wave band is also referred to as a millimeter wave link. When the millimeter wave link is in an enabled state, the millimeter wave link is used for data communication. When the millimeter wave link is in a disabled state, the millimeter wave link is not used for data communication.

As illustrated in Fig. 2, it is assumed that the TID #1 is assigned to three wireless links having a link ID of 1 to 3 and the millimeter wave link is set to the enabled state. At this time, a data frame including data to which the TID #1 is assigned is transmitted on a millimeter wave link (that is, a wireless link whose link ID is 3). When the millimeter wave link is switched from the enabled state to the disabled state, the data frame including the data to which the TID #1 is assigned is transmitted on the wireless link using the microwave band. As described above, a wireless link using a microwave band is used as an auxiliary for a millimeter wave link. Alternatively, when the millimeter wave link is set to be enabled, the data frame including the data to which the TID #1 is assigned may be transmitted using both the millimeter wave link and the wireless link using the microwave band.

Any one of the wireless links using the microwave band may be set as a primary link. The wireless link set as the primary link is used to exchange important information such as control information for controlling the millimeter wave link.

The access point 10 holds link management information similar to the link management information illustrated in Fig. 2 for each wireless terminal apparatus connected to the access point 10. That is, the link management information held by the access point 10 indicates a state of a wireless link between the access point 10 and each wireless terminal apparatus connected to the access point 10.

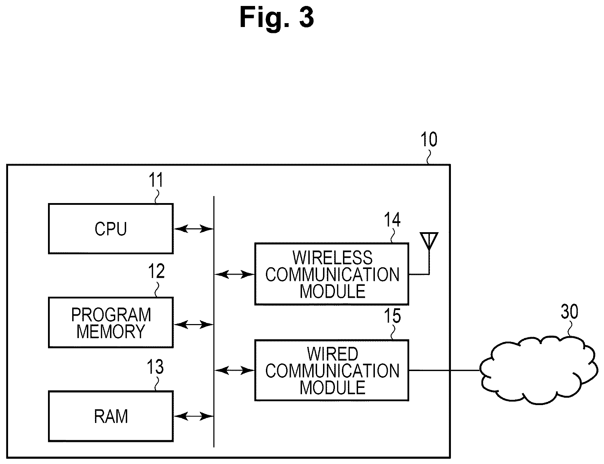

Fig. 3 schematically illustrates an example of a hardware configuration of the access point 10. As illustrated in Fig. 3, the access point 10 includes a central processing unit (CPU) 11, a program memory 12, a random access memory (RAM) 13, a wireless communication module 14, and a wired communication module 15 as hardware components. The CPU 11 is connected to a program memory 12, the RAM 13, the wireless communication module 14, and the wired communication module 15 via a bus.

The CPU 11 is an integrated circuit capable of executing various programs, and performs information processing. The program memory 12 is a nonvolatile semiconductor memory such as a read only memory (ROM) or a flash memory, and stores programs and data. The RAM 13 is, for example, a volatile semiconductor memory, and is used as a working area for the CPU 11. At least part of processing to be described with respect to the access point 10 can be performed by the CPU 11 executing a program stored in the program memory 12.

The wireless communication module 14 is circuitry used to transmit and receive data with a wireless signal. The wireless communication module 14 includes a plurality of wireless communication circuits corresponding to the plurality of affiliated APs 155 illustrated in Fig. 1, respectively, and each wireless communication circuit is connected to an antenna corresponding to the wireless communication circuit among the plurality of antennas. The wired communication module 15 is circuitry used to transmit and receive data by a wired signal, and is connected to the communication network 30.

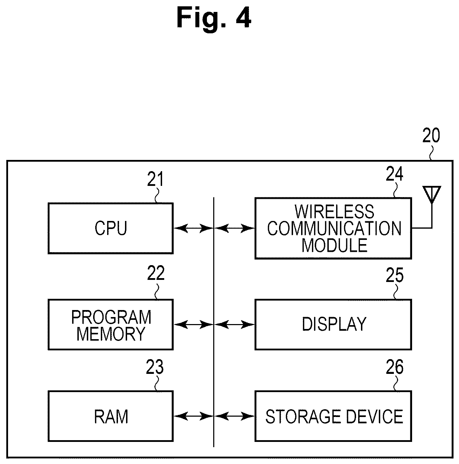

Fig. 4 schematically illustrates an example hardware configuration of the terminal 20. As illustrated in Fig. 4, the terminal 20 includes a CPU 21, a program memory 22, a RAM 23, a wireless communication module 24, a display 25, and a storage device 26 as hardware components.

The CPU 21 is an integrated circuit capable of executing various programs, and performs information processing. The program memory 22 is a nonvolatile semiconductor memory such as a ROM, and stores programs and data. The storage device 26 may be used as the program memory 22. The RAM 23 is, for example, a volatile semiconductor memory, and is used as a working area for the CPU 21. At least part of processing to be described with respect to the terminal 20 can be performed by the CPU 21 executing a program stored in the program memory 22.

The wireless communication module 24 is circuitry used to transmit and receive data with a wireless signal. The wireless communication module 24 includes a plurality of wireless communication circuits corresponding to the plurality of affiliated STAs 255 illustrated in Fig. 1, respectively, and each wireless communication circuit is connected to an antenna corresponding to the wireless communication circuit among the plurality of antennas. The display 25 displays information of a graphical user interface (GUI) provided by application software, or the like, for example. The display 25 may have a function as an input interface of the terminal 20. For example, a touch panel may be provided on the display 25. The storage device 26 is a nonvolatile storage device such as a hard disk drive (HDD) or a solid state drive (SSD), and stores data including, for example, system software of the terminal 20.

The hardware configuration illustrated in Fig. 4 is one example, and the terminal 20 may have a hardware configuration different from that illustrated in Fig. 4. For example, in a case where the terminal 20 is an IoT device or the like, the display 25 may be omitted from the terminal 20.

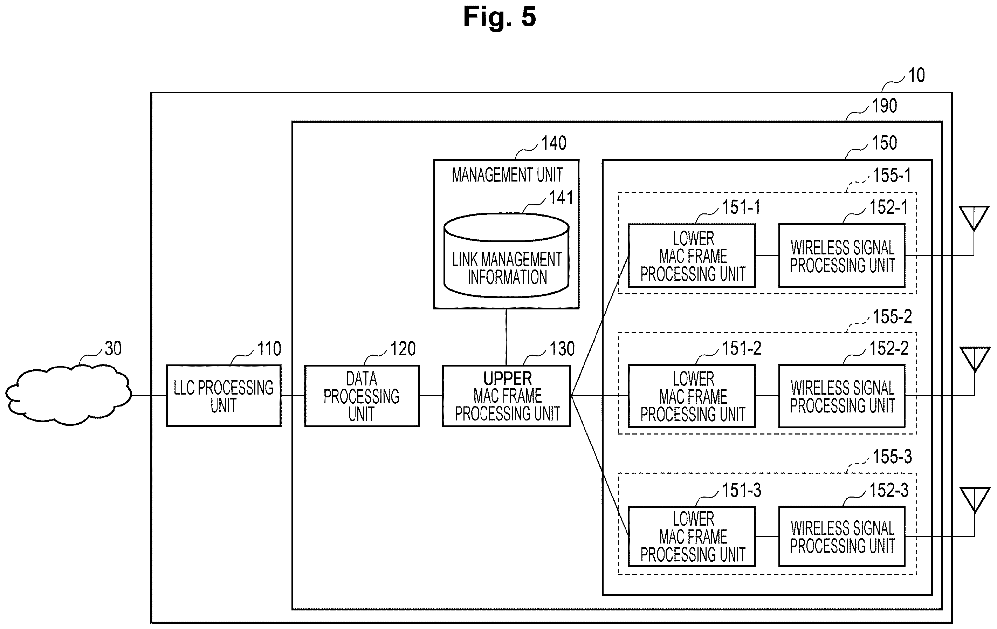

Fig. 5 schematically illustrates an example of a functional configuration of the access point 10. As illustrated in Fig. 5, the access point 10 includes an LLC processing unit 110, a data processing unit 120, an upper MAC frame processing unit 130, a management unit 140, and a communication unit 150. The data processing unit 120, the upper MAC frame processing unit 130, the management unit 140, and the communication unit 150 are included in the AP MLD 190 in Fig. 1. The LLC processing unit 110 may be implemented by a combination of the CPU 11 and the wired communication module 15. The data processing unit 120, the upper MAC frame processing unit 130, the management unit 140, and the communication unit 150 may be implemented by the wireless communication module 14 or a combination of the CPU 11 and the wireless communication module 14.

The LLC processing unit 110 executes processing of the LLC sublayer and processing of the upper layers (third layer to seventh layer) for an input signal. For example, the LLC processing unit 110 receives data from the communication network 30, generates an LLC packet by adding a destination service access point (DSAP) header, a source service access point (SSAP) header, and the like to the received data, and sends the generated LLC packet to the data processing unit 120. In addition, the LLC processing unit 110 receives an LLC packet from the data processing unit 120, extracts data from the received LLC packet, and transmits the extracted data to the communication network 30.

The data processing unit 120 receives the LLC packet from the LLC processing unit 110, adds a MAC header to the received LLC packet to generate a MAC frame, and sends the generated MAC frame to the upper MAC frame processing unit 130. Further, the data processing unit 120 receives a MAC frame from the upper MAC frame processing unit 130, extracts the LLC packet from the received MAC frame, and sends the extracted LLC packet to the LLC processing unit 110.

The upper MAC frame processing unit 130 receives the MAC frame from the data processing unit 120, and sends the received MAC frame to the communication unit 150. The upper MAC frame processing unit 130 may perform predetermined processing on the MAC frame received from the data processing unit 120. For example, the upper MAC frame processing unit 130 aggregates a plurality of MAC frames received from the data processing unit 120 to generate one MAC frame, and sends out the MAC frame to the communication unit 150. Further, the upper MAC frame processing unit 130 receives a MAC frame from communication unit 150, and sends the received MAC frame to the data processing unit 120 or the management unit 140 according to a type of the received MAC frame. For example, the upper MAC frame processing unit 130 sends the MAC frame to the data processing unit 120 in a case where the MAC frame is a data frame, and sends the MAC frame to the management unit 140 in a case where the MAC frame is a management frame or a control frame. The upper MAC frame processing unit 130 may perform predetermined processing on the MAC frame received from the communication unit 150. For example, the upper MAC frame processing unit 130 deaggregates the MAC frame received from the communication unit 150 to generate a plurality of MAC frames, and sends out the MAC frames to the data processing unit 120.

The communication unit 150 performs wireless communication with the terminal 20. The communication unit 150 includes a plurality of affiliated APs 155 (affiliated APs 155-1, 155-2, 155-3) illustrated in Fig. 1. Each of the affiliated APs 155 includes a lower MAC frame processing unit 151 and a wireless signal processing unit 152. For example, the affiliated AP 155-i includes a lower MAC frame processing unit 151-i and a wireless signal processing unit 152-i, where i is an integer from 1 to 3.

The lower MAC frame processing unit 151 receives the MAC frame from the upper MAC frame processing unit 130, performs processing including encryption on the received MAC frame, and sends the processed MAC frame to the wireless signal processing unit 152. The lower MAC frame processing unit 151 receives a MAC frame from the wireless signal processing unit 152, performs processing including decryption on the received MAC frame, and sends the processed MAC frame to the upper MAC frame processing unit 130.

The wireless signal processing unit 152 is configured to transmit and receive the wireless signals. For example, the wireless signal processing unit 152-1 is configured to transmit and receive a wireless signal using a first channel included in the microwave band, the wireless signal processing unit 152-2 is configured to transmit and receive a wireless signal using a second channel included in the microwave band, and the first channel is different from the second channel. The wireless signal processing unit 152-3 is configured to transmit and receive a wireless signal using a third channel included in the millimeter wave band.

The wireless signal processing unit 152 executes physical layer processing for the input MAC frame or wireless signal. The wireless signal processing unit 152 receives the MAC frame from the lower MAC frame processing unit 151, adds a preamble, a physical layer (PHY) header, and the like to the received MAC frame to generate a wireless frame, converts the wireless frame into a wireless signal by performing predetermined modulation processing, and emits the wireless signal via an antenna. The predetermined modulation processing includes convolutional coding, interleaving, subcarrier modulation, inverse fast Fourier transform (IFFT), orthogonal frequency division multiplexing (OFDM) modulation, and frequency transform, for example. Further, the wireless signal processing unit 152 receives a wireless signal from the terminal via an antenna, and performs predetermined demodulation processing for the received wireless signal to obtain a wireless frame. The predetermined demodulation processing includes frequency transform, OFDM demodulation, fast Fourier transform (FFT), subcarrier demodulation, deinterleaving, and Viterbi decoding, for example. Then the wireless signal processing unit 152 extracts the MAC frame from the wireless frame, and sends the extracted MAC frame to the lower MAC frame processing unit 151.

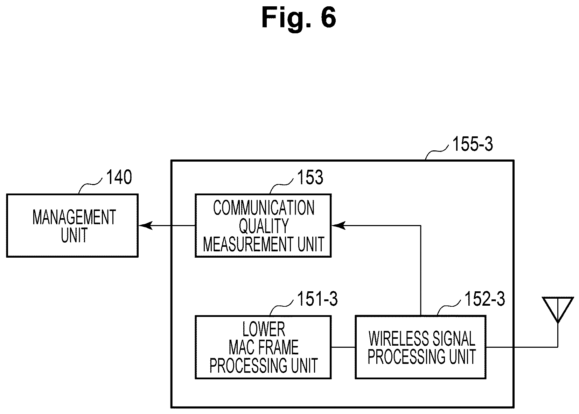

As illustrated in Fig. 6, the affiliated AP 155-3 may further include a communication quality measurement unit 153. The communication quality measurement unit 153 measures the reception power of the wireless signal from the terminal 20 received by the wireless signal processing unit 152-3, and notifies the management unit 140 of the measurement result. For example, a received signal strength indicator (RSSI) is measured as an index indicating the reception power. The measurement result of the reception power of the wireless signal from the terminal 20 received by the wireless signal processing unit 152-3 is used to evaluate the communication quality of the wireless link (millimeter wave link) between the wireless signal processing unit 152-3 and the terminal 20.

Referring to Fig. 5 again, the management unit 140 manages connection to each wireless terminal apparatus. For example, the management unit 140 sets up a link set with the wireless terminal apparatus via the communication unit 150. Specifically, in response to receiving the association request from the terminal 20, the management unit 140 performs association processing and authentication processing, to establish a plurality of links between the access point 10 and the terminal 20. After the link set is set up, any one or more wireless links included in the link set are used for data exchange between the access point 10 and the terminal 20.

The management unit 140 holds link management information 141 for managing the wireless terminal apparatus connected to the access point 10. The link management information 141 includes information as illustrated in Fig. 2 for each wireless terminal apparatus connected to the access point 10.

The link management information 141 is used by the upper MAC frame processing unit 130. For example, the upper MAC frame processing unit 130 uses the link management information 141 in order to distribute the MAC frame received from the data processing unit 120 or the management unit 140. Specifically, the upper MAC frame processing unit 130 refers to the link management information 141 with the TID assigned to the data included in the MAC frame in order to determine to which one of the affiliated APs 155-1, 155-2, and 155-3 the MAC frame is sent. For example, in a case where the link management information 141 includes the information illustrated in Fig. 2 and the TID #2 is assigned to the data included in the MAC frame, the upper MAC frame processing unit 130 sends the MAC frame to the affiliated AP 155-3.

The management unit 140 transmits (specifically, broadcasts) the beacon frame via the communication unit 150. The beacon frame includes, for example, an identifier of the access point 10, capability information, an identifier of each affiliated AP 155, and information indicating a frequency channel and an operation parameter of each affiliated AP 155. The identifier of the access point 10 is identification information for identifying the access point 10, and may be, for example, a MAC address assigned to the access point 10. The capability information includes first capability information indicating whether the multi-link operation is supported and second capability information indicating whether the communication in the millimeter wave band is supported. In the present embodiment, the first capability information is set to a value indicating that multi-link is supported, and the second capability information is set to a value indicating that communication in the millimeter wave band is supported. The identifier of the affiliated AP 155 is identification information for identifying the affiliated AP 155, and may be, for example, a MAC address assigned to the affiliated AP 155. The operation parameters include a plurality of parameters used for channel access control, such as the TXOP limit.

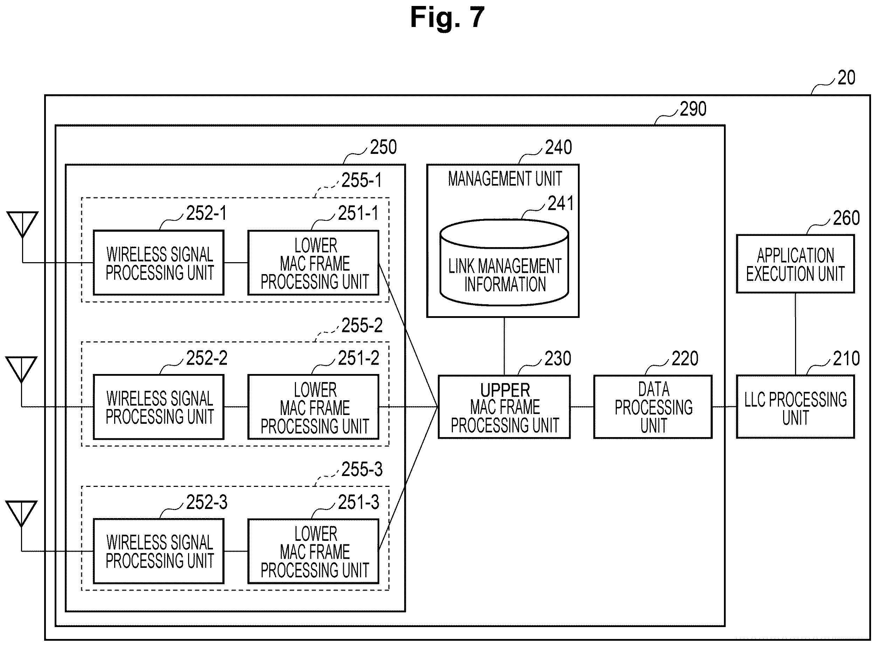

Fig. 7 schematically illustrates an example of a functional configuration of the terminal 20. As illustrated in Fig. 7, the terminal 20 includes an LLC processing unit 210, a data processing unit 220, an upper MAC frame processing unit 230, a management unit 240, a communication unit 250, and an application execution unit 260. The data processing unit 220, the upper MAC frame processing unit 230, the management unit 240, and the communication unit 250 are included in the Non-AP MLD 290 in Fig. 1. The LLC processing unit 210 and the application execution unit 260 may be implemented by the CPU 21. The data processing unit 220, the upper MAC frame processing unit 230, the management unit 240, and the communication unit 250 may be implemented by the wireless communication module 24 or a combination of the wireless communication module 24 and the CPU 21.

The application execution unit 260 executes an application such as an application that exchanges data with a server on the communication network 30 illustrated in Fig. 1.

The LLC processing unit 210 executes processing of the LLC sublayer and the upper layers for an input signal. For example, the LLC processing unit 210 receives data from the application execution unit 260, adds a DSAP header, an SSAP header, and the like to the received data to generate an LLC packet, and sends the generated LLC packet to the data processing unit 220. In addition, the LLC processing unit 210 receives an LLC packet from the data processing unit 220, extracts data from the received LLC packet, and transmits the extracted data to the application execution unit 260.

The data processing unit 220 receives the LLC packet from the LLC processing unit 210, adds a MAC header to the received LLC packet to generate a MAC frame, and sends the generated MAC frame to the upper MAC frame processing unit 230. Further, the data processing unit 220 receives a MAC frame from the upper MAC frame processing unit 230, extracts the LLC packet from the received MAC frame, and sends the extracted LLC packet to the LLC processing unit 210.

The upper MAC frame processing unit 230 receives the MAC frame from the data processing unit 220, and sends the received MAC frame to the communication unit 250. The upper MAC frame processing unit 230 may perform predetermined processing on the MAC frame received from the data processing unit 220. For example, the upper MAC frame processing unit 230 aggregates a plurality of MAC frames received from the data processing unit 220 to generate one MAC frame, and sends out the MAC frame to the communication unit 250. Further, the upper MAC frame processing unit 230 receives a MAC frame from communication unit 250, and sends the received MAC frame to the data processing unit 220 or the management unit 240 according to a type of the received MAC frame. For example, the upper MAC frame processing unit 230 sends the MAC frame to the data processing unit 220 in a case where the MAC frame is a data frame, and sends the MAC frame to the management unit 240 in a case where the MAC frame is a management frame or a control frame. The upper MAC frame processing unit 230 may perform predetermined processing on the MAC frame received from the communication unit 250. For example, the upper MAC frame processing unit 230 deaggregates the MAC frame received from the communication unit 250 to generate a plurality of MAC frames, and sends out the MAC frames to the data processing unit 220.

The communication unit 250 wirelessly communicates with the access point 10. The communication unit 250 includes a plurality of affiliated STAs 255 (affiliated STAs 255-1, 255-2, 255-3) illustrated in Fig. 1. Each of the affiliated STAs 255 includes a lower MAC frame processing unit 251 and a wireless signal processing unit 252. For example, the affiliated STA 255-i includes a lower MAC frame processing unit 251-i and a wireless signal processing unit 252-i, where i is an integer from 1 to 3.

The lower MAC frame processing unit 251 receives the MAC frame from the upper MAC frame processing unit 230, performs processing including encryption on the received MAC frame, and sends the processed MAC frame to the wireless signal processing unit 252. The lower MAC frame processing unit 251 receives a MAC frame from the wireless signal processing unit 252, performs processing including decryption on the received MAC frame, and sends the processed MAC frame to the upper MAC frame processing unit 230.

The wireless signal processing unit 252 is configured to transmit and receive the wireless signals. For example, the wireless signal processing unit 252-1 is configured to transmit and receive a wireless signal using a first channel included in the microwave band, the wireless signal processing unit 252-1 is configured to transmit and receive a wireless signal using a second channel included in the microwave band, and the first channel is different from the second channel. The wireless signal processing unit 252-3 is configured to transmit and receive a wireless signal using a third channel included in the millimeter wave band.

The wireless signal processing unit 252 executes physical layer processing for the input MAC frame or wireless signal. The wireless signal processing unit 252 receives the MAC frame from the lower MAC frame processing unit 251, adds a preamble, a PHY header, and the like to the received MAC frame to generate a wireless frame, converts the wireless frame into a wireless signal by performing predetermined modulation processing, and emits the wireless signal via an antenna. Further, the wireless signal processing unit 252 receives a wireless signal from the terminal via an antenna, and performs predetermined demodulation processing for the received wireless signal to obtain a wireless frame. Then the wireless signal processing unit 252 extracts the MAC frame from the wireless frame, and sends the extracted MAC frame to the lower MAC frame processing unit 251.

The management unit 240 manages the connection with the access point 10. For example, the management unit 240 receives a beacon frame from the access point 10 via the communication unit 250, and recognizes the presence of the access point 10 on the basis of the received beacon frame. The management unit 240 recognizes that the access point 10 supports the multi-link operation and that the access point 10 supports the communication in the millimeter wave band from the capability information included in the beacon frame received from the access point 10. The management unit 240 transmits an association request for requesting establishment of a link set including a millimeter wave link to the access point 10 by using either the wireless signal processing unit 252-1 or the wireless signal processing unit 252-2. The association request includes information indicating whether to use data communication in the millimeter wave band, information indicating a TID allowed to be assigned to the millimeter wave link, calibration information necessary for setting up an interface using the millimeter wave band, and the like. The access point 10 associates a wireless link with a TID on the basis of information indicating a TID allowed to be assigned to the millimeter wave link included in the association request. The access point 10 includes information indicating association between the wireless link and the TID in the association response.

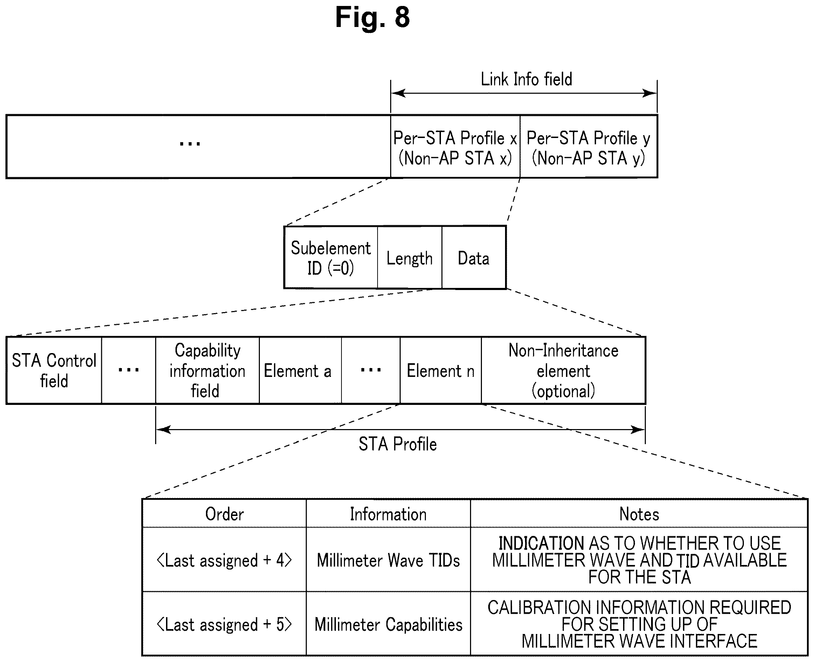

Fig. 8 schematically illustrates an example of a frame format of an association request. As illustrated in Fig. 8, the information indicating whether the data communication in the millimeter wave band is used, the information indicating the TID allowed to be assigned to the millimeter wave link, and the calibration information necessary for setting up the interface using the millimeter wave band may be stored as an extension of the Per-STA Profile in the Multi-Link element defined in the IEEE 802.11be standard.

Referring to Fig. 7 again, the management unit 240 holds link management information 241 for managing the access point 10 connected to the terminal 20. The link management information 241 includes information illustrated in Fig. 2.

The link management information 241 is used by the upper MAC frame processing unit 230. For example, the upper MAC frame processing unit 230 uses the link management information 241 in order to distribute the MAC frame received from the data processing unit 220 or the management unit 240. Specifically, the upper MAC frame processing unit 230 refers to the link management information 241 with the TID assigned to the data included in the MAC frame in order to determine to which one of the affiliated STAs 255-1, 255-2, and 255-3 the MAC frame is sent. For example, in a case where the link management information 241 includes the information illustrated in Fig. 2 and the TID #2 is assigned to the data included in the MAC frame, the upper MAC frame processing unit 130 sends the MAC frame to the affiliated STA 255-3.

The affiliated STA 255-3 may further include a communication quality measurement unit equivalent to the communication quality measurement unit 153 illustrated in Fig. 6. For example, the communication quality measurement unit of the affiliated STA 255-3 measures the reception power of the wireless signal from the access point received by the wireless signal processing unit 252-3, and notifies the management unit 240 of the measurement result. The management unit 240 may receive the measurement result from the affiliated STA 255 and transmit the received measurement result to the access point 10. The affiliated STA 255 that handles the microwave band is used to transmit the measurement result. For example, the management unit 240 transmits the measurement result received from the affiliated STA 255-3 to the access point 10 using the affiliated STA 255-1 or the affiliated STA 255-2.

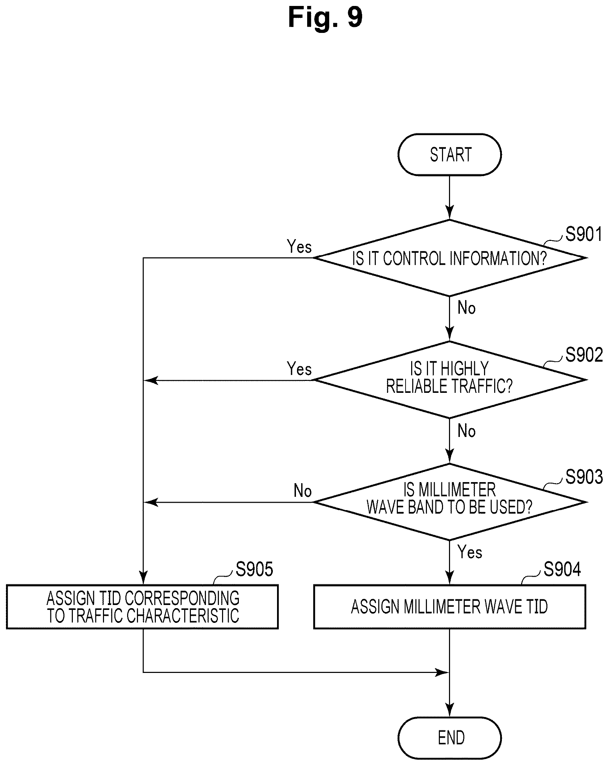

Fig. 9 schematically illustrates an example of processing of assigning a TID to traffic. The TID allowed to be assigned to the millimeter wave link and the TID prohibited to be assigned to the millimeter wave link are defined in advance. For example, the TID #1 is defined as a TID allowed to be assigned to the millimeter wave link, and the TID #2, the TID #3, and the TID #4 are defined as TIDs prohibited to be assigned to the millimeter wave link. For example, in the terminal 20, the TID is assigned on the basis of the identifier or the characteristic of the traffic.

As illustrated in Fig. 9, if the traffic is the control information (step S901; Yes), the TID corresponding to the control information is assigned to the traffic (step S905). The TID corresponding to the control information is one (for example, the TID #4) of the TIDs prohibited from being assigned to the millimeter wave link.

If the traffic is highly reliable traffic (step S902; Yes), the TID corresponding to the highly reliable traffic is assigned to the traffic (step S905). The highly reliable traffic indicates traffic for which reliable communication is required. For example, the highly reliable traffic is traffic for which low latency is required. The TID corresponding to the highly reliable traffic is one (for example, the TID #2) of the TIDs prohibited from being assigned to the millimeter wave link.

If the traffic is normal traffic which is neither the control information nor the highly reliable traffic (step S901; No & step S902; No), the flow proceeds to step S903. If traffic is not transmitted on the millimeter wave link (step S903; No), the TID corresponding to the normal traffic is assigned to the traffic (step S905). The TID corresponding to the normal traffic is one (for example, the TID #3) of the TIDs prohibited from being assigned to the millimeter wave link. If traffic is transmitted on the millimeter wave link (step S903; Yes), the TID (for example, #1) allowed to be assigned to the millimeter wave link is assigned to the traffic (step S904).

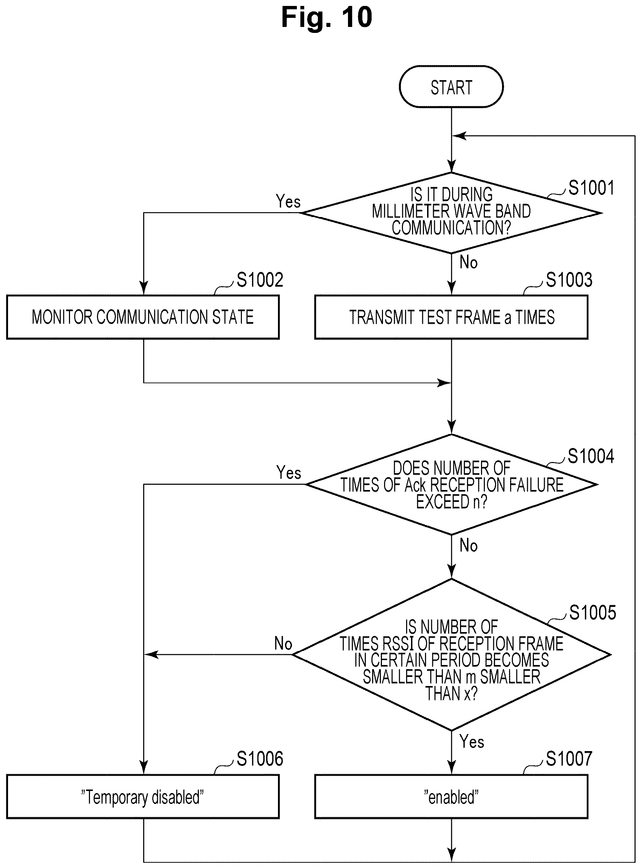

Fig. 10 schematically illustrates an example of processing of switching the millimeter wave link between an enabled state and a disable state. The processing illustrated in Fig. 10 is performed by the access point 10. Here, assume that a link set is established between the access point 10 and the terminal 20. Specifically, a wireless link between the wireless signal processing unit 152-1 of the access point 10 and the wireless signal processing unit 252-1 of the terminal 20 is established, a wireless link between the wireless signal processing unit 152-2 of the access point 10 and the wireless signal processing unit 252-2 of the terminal 20 is established, and a wireless link (millimeter wave link) between the wireless signal processing unit 152-3 of the access point 10 and the wireless signal processing unit 252-3 of the terminal 20 is established.

If the millimeter wave link is set to the enabled state (step S1001; Yes), the flow proceeds to step S1002, and if the millimeter wave link is set to the disable state (step S1001; No), the flow proceeds to step S1003.

First, a case where the millimeter wave link is set to the disabled state will be described.

In step S1003, the wireless signal processing unit 152-3 transmits the test frame to the terminal 20 a predetermined number of times (for example, a times) under the control of the management unit 140. The test frame is a MAC frame (for example, a data frame) used to determine switching of the millimeter wave link from disabled to inabled. When successfully receiving the test frame from the access point 10, the terminal 20 returns an acknowledgment (Ack) frame to the access point 10.

In step S1004, the management unit 140 determines whether the number of times the reception of the Ack frame from the terminal 20 fails exceeds a predetermined value n. For example, the management unit 140 sets the counter to 0 and performs the operation described below a predetermined number of times (for example, a times). The management unit 140 transmits the test frame to the terminal 20 using the wireless signal processing unit 152-3. The management unit 140 waits for the Ack frame from the terminal 20 for a predetermined time period. The management unit 140 increases the counter by 1 when the Ack frame is failed to be received during the predetermined time period. In a case where the Ack frame is received during a predetermined time period, the management unit 140 maintains the counter. The value of the counter after performing the above operation a predetermined number of times indicates the number of times the reception of the Ack frame from the terminal 20 has failed.

If the number of times the management unit 140 has failed to receive the Ack frame exceeds the predetermined value n (step S1004; Yes), the flow proceeds to step S1006. In step S1006, the management unit 140 maintains the millimeter wave link in a disable state. After the predetermined time period has elapsed, the flow returns to step S1001.

On the other hand, if the number of times that the management unit 140 has failed to receive the Ack frame does not exceed the predetermined value n (step S1004; No), the flow proceeds to step S1005. In step S1005, the management unit 140 determines whether the number of times the RSSI of the wireless signal from the terminal 20 received by the wireless signal processing unit 152-3 during the predetermined time period is smaller than a predetermined value m is smaller than a predetermined value x. For example, the management unit 140 measures the RSSI of the Ack frame from the terminal 20. Specifically, the management unit 140 sets the counter to 0 and performs the operation described below over a predetermined time period. When the wireless signal processing unit 152-3 receives the wireless signal from the terminal 20, the management unit 140 measures the RSSI of the wireless signal and determines whether the measured value of the RSSI is smaller than the predetermined value m. The management unit 140 increases the counter by 1 when the measured value of the RSSI is smaller than the predetermined value m, and maintains the counter when the measured value of the RSSI is not smaller than the predetermined value m. The value of the counter after the predetermined time period has elapsed indicates the number of times that the RSSI of the wireless signal from the terminal 20 received by the wireless signal processing unit 152-3 during the predetermined time period is smaller than the predetermined value m.

If the number of times that the RSSI of the wireless signal from the terminal 20 received by the wireless signal processing unit 152-3 in the predetermined time period is smaller than the predetermined value m is smaller than the predetermined value x (step S1005; Yes), the flow proceeds to step S1007. In step S1007, the management unit 140 switches the millimeter wave link from the disable state to the enabled state. Thereafter, the flow returns to step S1001.

On the other hand, if the number of times that the RSSI of the wireless signal from the terminal 20 received by the wireless signal processing unit 152-3 in the predetermined time period is smaller than the predetermined value m is not smaller than the predetermined value x (step S1005; No), the flow proceeds to step S1006. In step S1006, the management unit 140 maintains the millimeter wave link in a disabled state. Thereafter, the flow returns to step S1001.

Next, a case where the millimeter wave link is set to be enabled will be described.

If the millimeter wave link is set to be enabled (step S1001; Yes), the flow proceeds to step S1002. In step S1002, the management unit 140 monitors the communication state of the millimeter wave link. Thereafter, the flow returns to step S1004.

In step S1004, the management unit 140 determines whether the number of times the reception of the Ack frame from the terminal 20 fails exceeds a predetermined value n when a pieces of data frames or test frames are transmitted to the terminal 20.

If the number of times the reception of the Ack frame from the terminal 20 has failed exceeds the predetermined value n (step S1004; Yes), the flow proceeds to step S1006. In step S1006, the management unit 140 switches the millimeter wave link from the enabled state to the disabled state. After the predetermined time period has elapsed, the flow returns to step S1001.

If the number of times the reception of the Ack frame from the terminal 20 fails does not exceed the predetermined value n (step S1004; No), the flow proceeds to step S1005. If the number of times that the RSSI of the wireless signal from the terminal 20 received by the wireless signal processing unit 152-3 in the predetermined time period is smaller than the predetermined value m is smaller than the predetermined value x (step S1005; Yes), the flow proceeds to step S1007. In step S1007, the management unit 140 maintains the millimeter wave link in an enabled state.

On the other hand, if the number of times that the RSSI of the wireless signal from the terminal 20 received by the wireless signal processing unit 152-3 in the predetermined time period is smaller than the predetermined value m is not smaller than the predetermined value x (step S1005; No), the flow proceeds to step S1007. In step S1007, the management unit 140 switches the millimeter wave link from the enabled state to the disabled state. Thereafter, the flow returns to step S1001.

As described above, the millimeter wave link is set to the enabled state or the disabled state according to the communication quality thereof. In a case where the millimeter wave link is set to the disabled state, the management unit 140 maintains the millimeter wave link in the disabled state when the communication quality of the millimeter wave link is worse than a predetermined standard, and switches the millimeter wave link from the disabled state to the enabled state when the communication quality of the millimeter wave link is better than the predetermined standard. In a case where the millimeter wave link is set to the enabled state, the management unit 140 maintains the millimeter wave link in the enabled state when the communication quality of the millimeter wave link is better than a predetermined standard, and switches the millimeter wave link from the enabled state to the disabled state when the communication quality of the millimeter wave link is worse than the predetermined standard.

In the example described here, the standard for switching the millimeter wave link from the disabled state to the enabled state is the same as the standard for switching the millimeter wave link from the enabled state to the disabled state. Alternatively, the standard for switching the millimeter wave link from the disabled state to the enabled state may be different from the standard for switching the millimeter wave link from the enabled state to the disabled state.

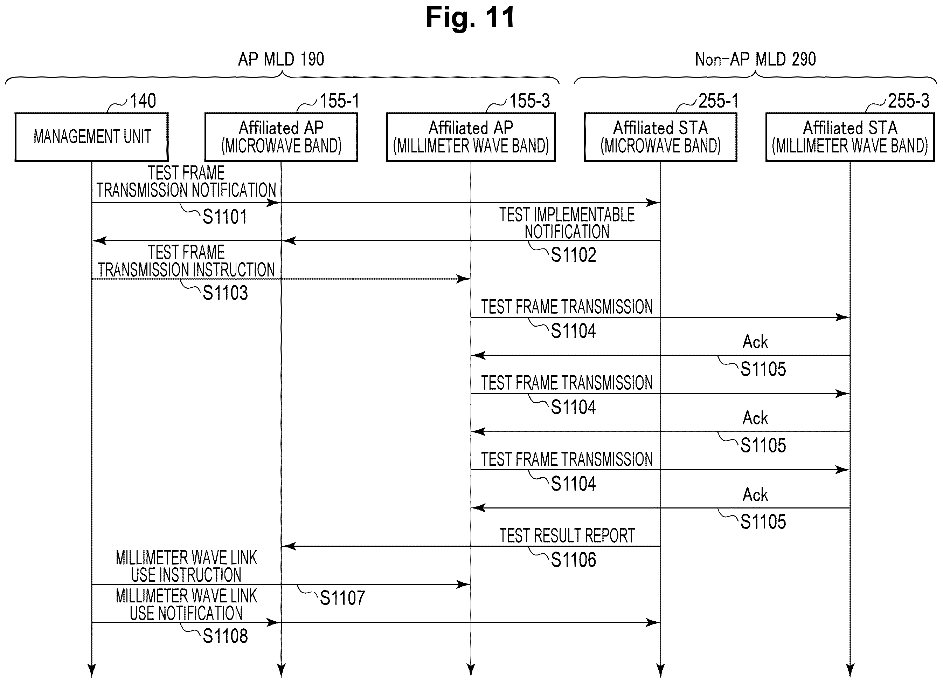

Fig. 11 schematically illustrates an example of processing of switching the millimeter wave link from the disabled state to the enabled state. The processing illustrated in Fig. 11 can also be applied to a situation in which the millimeter wave link is set to the enabled state.

In Fig. 11, the management unit 140 and the affiliated APs 155-1, 155-3 included in the AP MLD 190 of the access point 10 are illustrated, the affiliated STAs 255-1, 255-3 included in the Non-AP MLD 290 of the terminal 20 are illustrated, and the other components are omitted. Here, assume that a wireless link established between the affiliated AP 155-1 of the access point 10 and the affiliated STA 255-1 of the terminal 20 is set to a primary link.

In step S1101, the affiliated AP 155-1 transmits a test frame transmission notification to the terminal 20. Specifically, the management unit 140 transmits the test frame transmission notification to the terminal 20 using the affiliated AP 155-1. The test frame transmission notification is a MAC frame (for example, a management frame) including information notifying that transmission of a test frame using a millimeter wave link is started. The management unit 240 of the terminal 20 receives the test frame transmission notification from the access point 10 via the affiliated STA 255-1.

In step S1102, the affiliated STA 255-1 transmits a test implementable notification to the access point 10. Specifically, the management unit 240 transmits the test implementable notification to the access point 10 via the affiliated STA 255-1. The test implementable notification is a MAC frame (for example, a management frame) that is a response to the test frame transmission notification. The management unit 140 of the access point 10 receives the test implementable notification from the terminal 20 via the affiliated AP 155-1.

In step S1103, in response to reception of the test implementable notification from the terminal 20, the management unit 140 instructs the affiliated AP 155-3 to transmit a test frame.

In step S1104, the affiliated AP 155-3 receives the instruction from the management unit 140, and transmits the test frame to the terminal 20 via the millimeter wave link. In step S1105, in a case where the reception of the test frame from the terminal 20 is successful, the management unit 240 of the terminal 20 transmits the Ack frame to the access point 10 on the millimeter wave link using the affiliated STA 255-3, and does not transmit the Ack frame otherwise.

The test frame transmission shown in step S1104 is repeated a predetermined number of times (a times).

In step S1106, the management unit 240 transmits a test result report to the access point 10 using the affiliated STA 255-1. The test result report is a MAC frame (for example, a management frame) including information indicating the number of times of successful reception of the test frame. As an example, the management unit 140 of the access point 10 transmits a test end notification to the terminal 20 by using the affiliated AP 155-1 in order to notify the terminal 20 that the test frame transmission ends. In response to receiving the test end notification from the access point 10, the management unit 140 of the terminal 20 transmits a test result report to the access point 10.

The management unit 140 of the access point 10 receives the test result report from the terminal 20 via the affiliated AP 155-1. For example, the management unit 240 determines whether to switch the millimeter wave link to enabled on the basis of the number of times of successful reception of the test frame by the terminal 20 indicated by the received test result report. Here, the number of times of successful reception the test frame by the terminal 20 is equal to or greater than a predetermined value, and accordingly, the management unit 140 determines to switch the millimeter wave link to enabled.

In step S1107, the management unit 140 instructs the affiliated AP 155-3 to use the millimeter wave link. In step S1108, the management unit 140 transmits a millimeter wave link use notification to the terminal 20 using the affiliated AP 155-1. The millimeter wave link use notification is a MAC frame (for example, a management frame) including information notifying that the millimeter wave link is used for data communication, specifically, information notifying that the millimeter wave link is switched from a disabled state to an enabled state. The management unit 240 of the terminal 20 receives the millimeter wave link use notification from the access point 10 via the affiliated STA 255-1, and notifies the affiliated STA 255-3 of the use of the millimeter wave link.

As described above, in response to improving communication quality of the millimeter wave link, the millimeter wave link is switched from a disabled state to an enabled state. In the above-described example, the control information such as the test frame transmission notification, the test implementable notification, the test result report, or the millimeter wave link use notification is transmitted on the wireless link set to the primary link.

Here, the access point 10 evaluates the communication quality of the millimeter wave link on the basis of the test result report from the terminal 20. Alternatively, as described with reference to Fig. 10, the access point 10 may evaluate the communication quality of the millimeter wave link on the basis of the number of times the reception of the Ack frame from the terminal 20 fails.

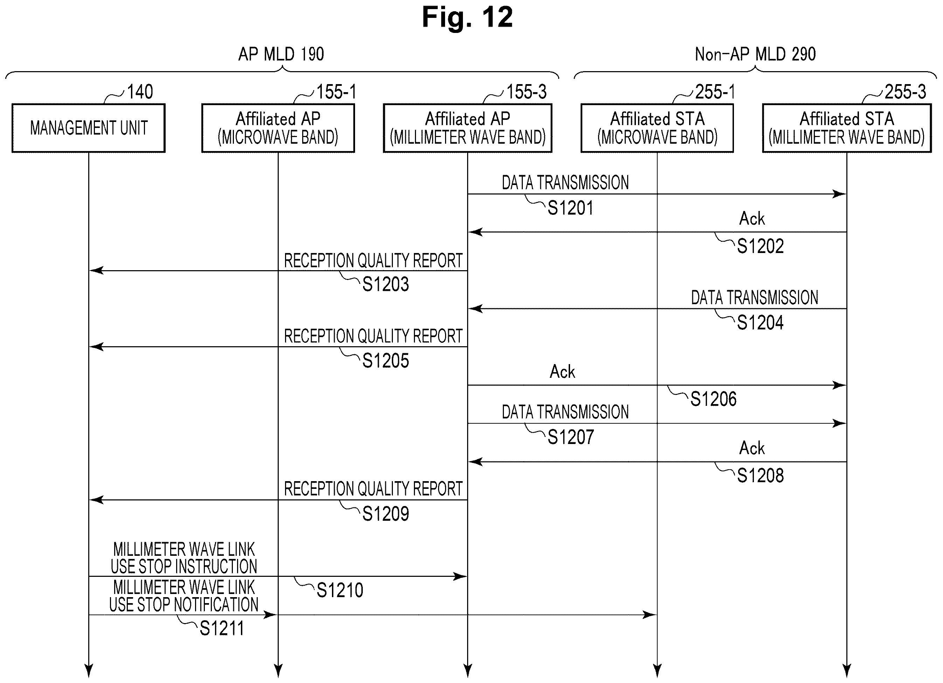

Fig. 12 schematically illustrates an example of processing of switching the millimeter wave link from the enabled state to the disabled state. The processing illustrated in Fig. 12 can also be applied to a situation in which the millimeter wave link is set to the disabled state.

In Fig. 12, the management unit 140 and the affiliated APs 155-1, 155-3 included in the AP MLD 190 of the access point 10 are illustrated, the affiliated STAs 255-1, 255-3 included in the Non-AP MLD 290 of the terminal 20 are illustrated, and the other components are omitted. Here, assume that a wireless link established between the affiliated AP 155-1 of the access point 10 and the affiliated STA 255-1 of the terminal 20 is set to a primary link.

In step S1201, the affiliated AP 155-3 transmits a data frame to the terminal 20. The management unit 240 of the terminal 20 receives the data frame from the access point 10 via the affiliated STA 255-3.

In step S1202, the affiliated STA 255-3 transmits an Ack frame for the data frame to the access point 10.

In step S1203, the affiliated AP 155-3 receives the Ack frame from the terminal 20, and sends a communication quality report indicating reception power (for example, RSSI) of the Ack frame to the management unit 140.

In step S1204, the affiliated STA 255-3 transmits the data frame to the access point 10.

In step S1205, the affiliated AP 155-3 receives the data frame from the terminal 20 and transmits a communication quality report indicating the reception power of the data frame to the management unit 140. In step S1206, the affiliated AP 155-3 transmits an Ack frame for the data frame from the terminal 20 to the terminal 20.

In step S1207, the affiliated AP 155-3 transmits a data frame to the terminal 20. In step S1208, the affiliated STA 255-3 transmits an Ack frame for the data frame to the access point 10. In step S1209, the affiliated AP 155-3 receives the Ack frame from the terminal 20 and transmits a communication quality report indicating the reception power of the Ack frame to the management unit 140.

After data exchange is performed between the access point 10 and the terminal 20 over a predetermined unit period, the management unit 140 of the access point 10 determines whether to switch the millimeter wave link to the disabled state on the basis of the number of times of reception power becoming equal to or less than a predetermined value during the unit period. The management unit 140 determines to switch the millimeter wave link to the disabled state when the number of times the reception power becomes equal to or less than a predetermined value during the unit period is equal to or greater than a predetermined number of times, and otherwise, determines to maintain the millimeter wave link in the enabled state. Here, assume that the management unit 140 determines to switch the millimeter wave link to the disabled state.

In step S1210, the management unit 140 instructs the affiliated AP 155-3 to stop using the millimeter wave link. In step S1211, the management unit 140 transmits, to the terminal 20, a millimeter wave link use stop notification for notifying that the use of the millimeter wave link is stopped, using the affiliated AP 155-1. The management unit 240 of the terminal 20 receives the millimeter wave link use stop notification from the access point 10 via the affiliated STA 255-1, and notifies the affiliated STA 255-1 of the stop of use of the millimeter wave link.

As described above, in response to the communication quality of the millimeter wave link being degraded, the use of the millimeter wave link is stopped.

In the example described above, the Ack frame is returned for each data frame. Alternatively, a Block Ack frame including a plurality of Ack frames for each of the plurality of data frames may be returned. The Block Ack frame may be transmitted by a wireless link using a microwave band instead of the millimeter wave link.

As described above, the access point 10 includes the wireless signal processing units 152-1, 152-2 configured to transmit and receive wireless signals using the microwave band, and the wireless signal processing unit 152-3 configured to transmit and receive wireless signals using the millimeter wave band. The terminal 20 includes the wireless signal processing units 252-1, 252-2 configured to transmit and receive wireless signals using the microwave band, and the wireless signal processing unit 252-3 configured to transmit and receive wireless signals using the millimeter wave band. A first wireless link between the wireless signal processing unit 152-1 and the wireless signal processing unit 252-1, a second wireless link between the wireless signal processing unit 152-2 and the wireless signal processing unit 252-2, and a third wireless link between the wireless signal processing unit 152-3 and the wireless signal processing unit 252-3 are established.

The access point 10 transmits first control information to the terminal 20, the first control information being for switching the third wireless link to a state of not using the third wireless link for data communication, when communication quality of the third wireless link becomes worse than a predetermined standard when the third wireless link is in a state of being used for data communication, and transmits the second control information to the terminal 20, the second control information being for switching the third wireless link to a state of using the third wireless link for the data communication when the communication quality of the third wireless link becomes better than a predetermined standard when the third wireless link is in a state of not being used for the data communication.

In the above configuration, the use of the wireless link using the millimeter wave band is controlled according to the communication quality thereof. Specifically, when the communication quality of the wireless link deteriorates, the use of the wireless link is stopped, and when the communication quality of the wireless link improves, the use of the wireless link is started. As a result, even in a case where the communication quality of the wireless link using the frequency channel of the millimeter wave band is deteriorated, highly reliable data transmission can be performed.

The access point 10 transmits the first control information and the second control information to the terminal 20 on the first wireless link or the second wireless link. In this configuration, the control information is transmitted through a more stable wireless link, and the transmission of the control information is achieved with high reliability.

The access point 10 receives an association request requesting establishment of a link set including the first wireless link, the second wireless link, and the third wireless link from the terminal 20 via the wireless signal processing unit 152-1 or the wireless signal processing unit 152-2, and sets up the link set in response to the association request. The association request includes calibration information for adjusting a radio frequency of an interface that uses a millimeter wave band. According to this configuration, before the access point 10 is connected to the terminal 20, the calibration information can be exchanged between the access point 10 and the terminal 20. Exchange of control information necessary for performing calibration such as start of calibration and completion notification may be performed on the first wireless link.

The above-described embodiment is an example. Hereinafter, modification examples of the embodiments will be described.

In the above-described embodiment, one affiliated AP 155 using the millimeter wave band is provided in the access point 10. A plurality of affiliated APs 155 using the millimeter wave band may be provided in the access point 10.

In the modification, in the access point 10 illustrated in Fig. 5, the wireless signal processing unit 152-2 is configured to transmit and receive the wireless signals using the millimeter wave band similarly to the wireless signal processing unit 152-3. The wireless signal processing unit 152-2 is used to monitor other channels included in the millimeter wave band. The other channels included in the millimeter wave band indicate channels different from the channel used by the wireless signal processing unit 152-3.

In the modification, when the communication quality of the millimeter wave link is deteriorated, the use of the millimeter wave link is not stopped, but the channel is switched to continue the data communication on the millimeter wave link.

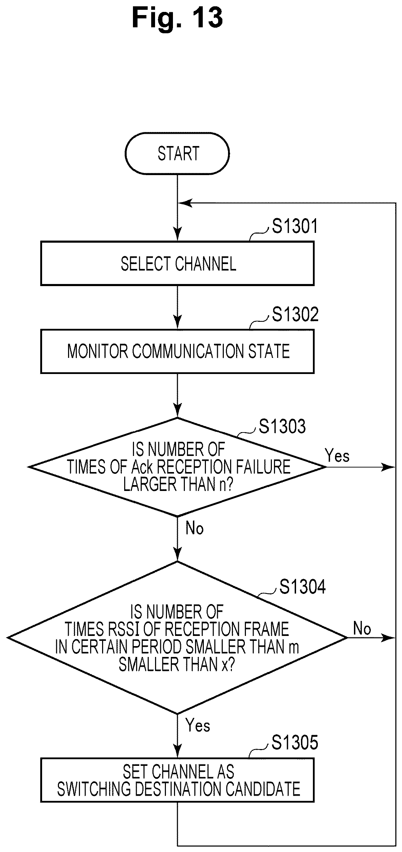

Fig. 13 schematically illustrates an example of processing of determining a channel switching destination candidate. The processing illustrated in Fig. 13 is performed by the access point 10.

In step S1301, the management unit 140 selects one channel different from the channel used by the wireless signal processing unit 152-3 from the plurality of channels included in the millimeter wave band.

In step S1302, the management unit 140 applies the selected channel to the wireless signal processing unit 152-2, and monitors the communication state of the data communication using the selected channel. The processing shown in steps S1303 and S1304 is similar to the processing shown in steps S1004 and S1005 of Fig. 10. For example, the management unit 140 evaluates the communication state of the channel by transmitting the test frame a times on the selected channel and counting the number of times the reception of the Ack frame from the terminal 20 fails. Prior to transmission of the test frame, the same channel is set in synchronization between the access point 10 and the terminal 20. For example, the access point 10 uses the wireless signal processing unit 152-1 to transmit information notifying the terminal 20 of the channel selected in step S1301 on the wireless link using the microwave band.

If the quality of data communication using the channel selected in step S1301 is worse than a predetermined standard (step S1303; Yes or step S1304; No), the flow returns to step S1301. In step S1301, another channel is selected, and subsequent processing is executed.

If the quality of data communication using the channel selected in step S1301 is better than a predetermined standard (step S1303; No & step S1304; Yes), the management unit 140 sets the channel selected in step S1301 as the switching destination candidate (step S1305). Subsequently, the flow returns to step S1301. In step S1301, another channel is selected, and subsequent processing is executed.

As described above, a channel, whose communication quality is better than a predetermined standard, included in the millimeter wave band is determined as a switching destination candidate.

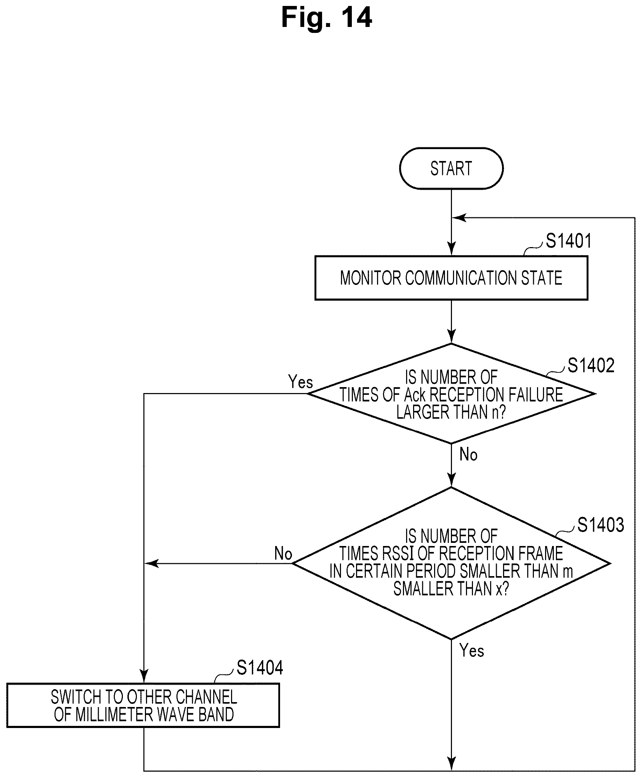

Fig. 14 schematically illustrates an example of processing of switching the channel used in the millimeter wave link. The processing illustrated in Fig. 14 is performed by the access point 10.

In step S1401, the management unit 140 monitors the communication state of data communication using the millimeter wave link. The processing shown in steps S1402 and S1403 is similar to the processing shown in steps S1004 and S1005 of Fig. 10, and description of the processing will be omitted.

If the quality of data communication using the millimeter wave link is better than a predetermined standard (step S1402; No & step S1403; Yes), the flow returns to step S1401. In this case, channel switching is not performed.

If the quality of data communication using the millimeter wave link is worse than the predetermined standard (step S1402; Yes or step S1403; No), the flow proceeds to step S1404. In step S1404, the management unit 140 switches the channel to be used in the millimeter wave link. For example, the management unit 140 selects one of one or more switching destination candidates determined in the processing shown in Fig. 13 and applies the selected switching destination candidate to the millimeter wave link. For example, a switching destination candidate having the best communication quality is selected.

When no switching destination candidate is determined in the processing shown in Fig. 13, the management unit 140 may switch the millimeter wave link from the enabled state (state of being used for data communication) to the disabled state (state of not being used for data communication).

The management unit 140 transmits a channel switching notification including switching information indicating that the channel of the millimeter wave link is switched to the terminal 20 by using the affiliated AP 155-1. The channel switching notification is a MAC frame (for example, a management frame). The switching information is an example of control information, and includes information for specifying a channel after switching. The switching information may include information indicating timing of switching the channel. Alternatively, the switching timing may be determined in advance such that the switching is performed at a timing when a predetermined time has elapsed from the reception of the channel switching notification. The management unit 140 of the terminal 20 receives the channel switching notification from the access point 10, and switches the channel of the millimeter wave link to the channel specified by the switching notification.

As described above, when the quality of data communication using the millimeter wave link is deteriorated, the channel used in the millimeter wave link is switched. As a result, even in a case where the communication quality of the wireless link using the frequency channel of the millimeter wave band is deteriorated, highly reliable data transmission can be performed.

In the embodiments described above, the access point 10 determines whether to use the millimeter wave link for data communication. Alternatively, the terminal 20 may determine whether to use the millimeter wave link for data communication. In this case, the terminal 20 transmits, to the access point 10, control information for switching whether to use the millimeter wave link for data communication, and the access point 10 controls use of the millimeter wave link in response to receiving the control information from the terminal 20.

The present invention is not limited to the above embodiments, and various modifications can be made in implementation stages without departing from the gist of the present invention. Further, the embodiments may be implemented in appropriate combination, and in this case, a combined effect can be obtained. Further, the above embodiment includes various inventions, and various inventions can be extracted by combinations selected from the plurality of disclosed components. For example, in a case where the problem can be solved and the effects can be obtained even if some components are deleted from all the components described in the embodiment, a configuration from which the components are deleted can be extracted as an invention.

### Reference Signs List

- 10: Access point
- 11: CPU
- 12: Program memory
- 13: RAM
- 14: Wireless communication module
- 15: Wired communication module
- 20: Terminal
- 21: CPU
- 22: Program memory
- 23: RAM
- 24: Wireless communication module
- 25: Display
- 26: Storage device
- 30: Communication network
- 45: Wireless communication system
- 50: Communication system
- 110: LLC processing unit
- 120: Data processing unit
- 130: Upper MAC frame processing unit
- 140: Management unit
- 141: Link management information
- 150: Communication unit
- 151: Lower MAC frame processing unit
- 152: Wireless signal processing unit
- 153: Communication quality measurement unit
- 155: Affiliated AP
- 190: AP MLD
- 210: LLC processing unit
- 220: Data processing unit
- 230: Upper MAC frame processing unit
- 240: Management unit
- 241: Link management information
- 250: Communication unit
- 251: Lower MAC frame processing unit
- 252: Wireless signal processing unit
- 255: Affiliated STA
- 260: Application execution unit
- 290: Non-AP MLD

## Claims

1. An access point comprising:
a first wireless signal processing unit configured to transmit and receive a wireless signal by using a microwave band;
a second wireless signal processing unit configured to transmit and receive a wireless signal by using a millimeter wave band; and
a management unit configured to manage a first wireless link between the first wireless signal processing unit and a wireless terminal apparatus and a second wireless link between the second wireless signal processing unit and the wireless terminal apparatus, wherein,
when communication quality of the second wireless link becomes worse than a predetermined first standard when the second wireless link is in a state of being used for data communication, the management unit switches the second wireless link to a state of not being used for the data communication, and
when the communication quality of the second wireless link becomes better than a predetermined second standard when the second wireless link is in a state of not being used for the data communication, the management unit switches the second wireless link to a state of being used for the data communication.

2. The access point according to claim 1, wherein
the management unit exchanges, with the wireless terminal apparatus, control information for switching whether to use the second wireless link for the data communication on the first wireless link.

3. The access point according to claim 1, wherein
the management unit
receives, via the first wireless signal processing unit, an association request requesting establishment of a link set including the first wireless link and the second wireless link from the wireless terminal apparatus, and
in response to the association request, establishes the first wireless link and the second wireless link, and
the association request includes calibration information for adjusting a radio frequency of the millimeter wave band.

4. A wireless terminal apparatus comprising:
a first wireless signal processing unit configured to transmit and receive a wireless signal by using a microwave band;
a second wireless signal processing unit configured to transmit and receive a wireless signal by using a millimeter wave band; and
a management unit configured to manage a first wireless link between the first wireless signal processing unit and an access point and a second wireless link between the second wireless signal processing unit and the access point, wherein,
when communication quality of the second wireless link becomes worse than a predetermined first standard when the second wireless link is in a state of being used for data communication, the management unit switches the second wireless link to a state of not being used for the data communication, and
when the communication quality of the second wireless link becomes better than a predetermined second standard when the second wireless link is in a state of not being used for the data communication, the management unit switches the second wireless link to a state of being used for the data communication.

5. The wireless terminal apparatus according to claim 4, wherein
the management unit exchanges, with the access point, control information for switching whether to use the second wireless link for the data communication on the first wireless link.

6. The wireless terminal apparatus according to claim 4, wherein
the management unit transmits an association request for requesting establishment of a link set including the first wireless link and the second wireless link to the access point by using the first wireless signal processing unit, and
the association request includes calibration information for adjusting a radio frequency of the millimeter wave band.

7. A wireless communication method performed by an access point, the access point including a first wireless signal processing unit configured to transmit and receive a wireless signal by using a microwave band, and a second wireless signal processing unit configured to transmit and receive a wireless signal by using a millimeter wave band, the wireless communication method comprising:
managing a first wireless link between the first wireless signal processing unit and a wireless terminal apparatus and a second wireless link between the second wireless signal processing unit and the wireless terminal apparatus;
when communication quality of the second wireless link becomes worse than a predetermined first standard when the second wireless link is in a state of being used for data communication, switching the second wireless link to a state of not being used for the data communication; and
when the communication quality of the second wireless link becomes better than a predetermined second standard when the second wireless link is in a state of not being used for the data communication, switching the second wireless link to a state of being used for the data communication.

8. A wireless communication method performed by a wireless terminal apparatus, the wireless terminal apparatus including a first wireless signal processing unit configured to transmit and receive a wireless signal by using a microwave band, and a second wireless signal processing unit configured to transmit and receive a wireless signal by using a millimeter wave band, the wireless communication method comprising:
managing a first wireless link between the first wireless signal processing unit and an access point and a second wireless link between the second wireless signal processing unit and the access point;
when communication quality of the second wireless link becomes worse than a predetermined first standard when the second wireless link is in a state of being used for data communication, switching the second wireless link to a state of not being used for the data communication; and
when the communication quality of the second wireless link becomes better than a predetermined second standard when the second wireless link is in a state of not being used for the data communication, switching the second wireless link to a state of being used for the data communication.
